# EUROPEAN PATENT APPLICATION

(11) **EP 4 390 830 A1**
(43) Date of publication of application: **26.06.2024**
(21) Application number: 22216323.0
(22) Date of filing: 23.12.2022
(51) Int. Cl.: G06T 1/20, G06T 5/00

(54) **STREAM BASED VIDEO FRAME CORRECTION**

(71) Applicant: ESG Elektroniksystem- und Logistik-GmbH, 80807 München (DE)
(72) Inventor: SCHMID, Michael, 82256 Fürstenfeldbruck (DE); POUCKI, Vladimir, 82110 Germering (DE)
(74) Representative: Betten & Resch

(57) **Abstract**

A method and integrated circuit of video frame correction by an integrated circuit, IC, wherein the integrated circuit performs the following steps: receiving lookup table, LUT, mesh points from a software application, each LUT mesh point defining a projection from an output pixel of an output frame to a corresponding input pixel of an input frame, wherein a total number of LUT mesh points is less than a total number of pixels of the output frame; storing the received LUT mesh points on a first set of memory blocks of the integrated circuit; sequentially receiving input pixels of the input frame as captured by an image sensor of a camera; sequentially storing the received input pixels on a second set of memory blocks of the integrated circuit; and in response to storing a predefined portion of the input frame, generating the output frame by further performing the following steps within one fixed clock cycle: selecting one of the output pixels of the output frame as target pixel; determining a pixel value of the target pixel by: retrieving, from the first set of memory blocks, two or more LUT mesh points associated with the target pixel; determining a source pixel of the predefined portion for the target pixel on the input frame by interpolating data values of the retrieved two or more LUT mesh points; retrieving two or more input pixels from the second set of memory blocks that are located closest to the determined source pixel; determining the pixel value of the target pixel by interpolating between the two or more input pixels retrieved; outputting the pixel value of the target pixel; if all output pixel values of all output pixels are determined, terminating, or otherwise further performing the following steps: receiving a further input pixel from the image sensor of the camera; and storing the received further input pixel in the second set of memory blocks; selecting another of the output pixels of the output frame as target pixel.

## Description

### TECHNICAL FIELD

The present disclosure is related to systems and methods for stream-based video frame correction in near real-time.

### BACKGROUND

In the field of aviation, flights are particularly subject to safety risks when they occur in conditions associated with a "Degraded Visual Environment" (DVE). Degraded Visual Environment is the loss of visual cues for a pilot in flight - during either takeoff, landing, or enroute. DVE conditions include degradation due to weather such as rain, snow, and fog, as well as dust, sand, and smoke. These conditions may obscure the cues to interpret speed, location, and approach. With such cues obscured, pilots are faced with on in-cockpit instrumentation and increasing workload while reducing situation awareness. Under DVE conditions, pilots must have easy access to flight critical information presented in a way that minimizes additional workload and maximizes situation awareness. A technology that prevents the pilot from diverting visual attention into the cockpit away from external events is a head-up display (HUD). A HUD is a glass-mounted panel in the pilot's near visual field that displays flight information, typically two-dimensional or three-dimensional traditional flight references (e.g. airspeed, altitude, and power), and a representation of the outside environment. Due to this enhanced vision system, a HUD allows the pilot to fly eyes out rather than switching attention to displays inside the cockpit. The HUD aligns with the external environment and generates a conformal symbology, providing a detailed, realistic representation of the terrain in front of the aircraft and potential obstacles at low altitudes. The presentation of synthetic environmental information in the HUD relies on sensor data, including camera image data. This image data must be processed and corrected to accurately match the external environment's representation. For secure aircraft operation, processing should be near real-time to minimize latency between the rendered synthetic representation on the HUB and the actual environment visible through the HUB. The image corrections may comprise for example distortion correction, up- or downscaling, homography, cutting, warping, clipping, boxing and/or position shifting.

Field-programmable gate arrays (FPGAs) are becoming increasingly popular for implementing image processing applications. This is especially the case for real-time embedded applications, where latency is an important issue. However, most prior art implementations use a frame-based correction approach, wherein the entire frame is stored on the FPGA, and then the correction algorithms are applied cyclically. The primary target of these applications is usually obtaining a high update rate (e.g., 60 Hz) but not the lowest possible pipeline delay between input and output frame. Frame-based image corrections can thus be used to realize pipeline delays of approximately 50 ms, which, however, remain to be optimized for DVE applications.

Therefore, there is a need to further reduce the latency of video image correction to be suitable for DVE applications.

The underlying problem addressed by the present disclosure is how to achieve a near real-time video frame correction.

According to the present invention, said problem is solved by a method and an integrated circuit in particular, a method according to claim 1 and an integrated circuit according to claim 13.

### SUMMARY

A summary of various aspects of the present disclosure is hereinafter presented to provide a basic understanding of these aspects and their associated advantages. Further aspects and technical details are covered in the subsequent chapter entitled "detailed description."

According to one aspect, a method of video frame correction by an integrated circuit, IC, comprises the integrated circuit performing the following steps: receiving lookup table, LUT, mesh points from a software application, each LUT mesh point defining a projection from an output pixel of an output frame to a corresponding input pixel of an input frame, wherein a total number of LUT mesh points is less than a total number of pixels of the output frame; storing the received LUT mesh points on a first set of memory blocks of the integrated circuit; sequentially receiving input pixels of the input frame as captured by an image sensor of a camera; sequentially storing the received input pixels on a second set of memory blocks of the integrated circuit; and in response to storing a predefined portion of the input frame, generating the output frame by further performing the following steps within one fixed clock cycle: selecting one of the output pixels of the output frame as target pixel; determining a pixel value of the target pixel by: retrieving, from the first set of memory blocks, two or more LUT mesh points associated with the target pixel; determining a source pixel of the predefined portion for the target pixel on the input frame by interpolating data values of the retrieved two or more LUT mesh points; retrieving two or more input pixels from the second set of memory blocks that are located closest to the determined source pixel; determining the pixel value of the target pixel by interpolating between the two or more input pixels retrieved; outputting the pixel value of the target pixel; if all output pixel values of all output pixels are determined, terminating, or otherwise further performing the following steps: receiving a further input pixel from the image sensor of the camera; and storing the received further input pixel in the second set of memory blocks; selecting another of the output pixels of the output frame as target pixel.

This method has the beneficial effect of achieving high throughput and low latency. This is inter alia accomplished by the method starting to process the video frame as soon as the required pixels are received and continuing to process the rest of the incoming image as a pipeline. This near real-time stream-based image processing is achieved by optimizing on-chip memory allocation and handling as described above. On-chip memory usually has low access latency but a relatively small capacity. Improper memory management resulting from poor memory allocation may result, for example in "out-of-memory" errors, therefore, leading to a considerable negative impact on processing latency. The method described above makes use of the low access latency of on-chip memory and overcomes the drawback of its small memory capacity by employing a set of on-chip memory blocks to store only a predefined percentage of the input frame. Only the pixels of the input frame are stored, which will be required in the subsequent computations. This is determined based on the maximum error or deviation between the input frame to be corrected and the corresponding corrected output frame thereby minimizing storage usage. It eliminates the need for off-chip memory, which has higher capacity but longer latency and lower bandwidth.

Moreover, the method described above reduces memory latency, so the time between initiating a request for a byte in memory until it is retrieved, by distributing the input pixels to different memory blocks of the set of memory blocks. As the received input pixels are streamed to the IC, they are sequentially distributed to the various memory blocks of the set of on-chip memory blocks according to a predefined distribution rule. This means that the pixels needed for the subsequent interpolation step are already stored in a pre-ordered manner. For example, in the case of bilinear interpolation, four pixels will be distributed to four distinct memory blocks. In each clock cycle, four pixels can then be read in parallel from the four memory blocks for the subsequent calculation. The distribution of the input data reduces the number of redundant memory read accesses and has the advantage that the maximum clock rate is increased.

Analogously, the LUT entries or mesh points are streamed into different memory blocks of another set of memory blocks according to a distribution rule derived from the subsequent interpolation technique implemented. This has the advantage of reducing the number of redundant read accesses for loading the mesh points and determining the correction data.

Memory usage is also optimized by not storing a mesh point for each pixel of the input or output frame, but only for a specific subset of the input and output pixels. For input/output pixels without a mesh point stored, the respective mesh point is determined by interpolating the mesh points that were stored in the on-chip memory.

According to another aspect, each LUT mesh point may be a pointer to one of the input pixels.

A LUT is used to transform the input frame into a modified output frame. The use of a predefined LUT, which combines all image corrections into a mapping between input and corresponding output pixel, reduces the computation time on the chip. Complex image corrections are therefore applied in near real-time.

According to a further aspect, determining the source pixel may comprise the step of determining interpolated source pixel coordinates of the source pixel by interpolating, based on a LUT mesh point interpolation method implemented on the integrated circuit, between two or more input pixel coordinates of the retrieved two or more LUT mesh points.

According to another aspect, only each multiple of the output pixels may be an output pixel having one corresponding LUT mesh point in the first set of memory blocks, and wherein the LUT mesh points may be determined by the software application based on one or more video frame geometry corrections to be applied to the input frame.

This has the advantage that on-chip memory usage is further minimized. In addition, time-consuming calculations for generating the mesh points are avoided on the implementation side, since the mesh points are determined by the software application before the correction of the input frame is actually performed by the IC.

According to another aspect, the retrieved two or more LUT mesh points associated with the target pixel may be LUT mesh points of corresponding two or more neighboring output pixels located closest to the target pixel having one corresponding LUT mesh point in the first set of memory blocks, and wherein retrieving the two or more LUT mesh points from the first set of memory blocks may comprise: retrieving in parallel, from each memory block of the first set of memory blocks, one LUT mesh point of the two or more LUT mesh points respectively. This has the advantage of further reducing latency.

According to an even further aspect, storing the received LUT mesh points on the first set of memory blocks may further comprise performing the following steps by the integrated circuit for each output pixel of the output frame: sequentially storing each received LUT mesh point associated with the output pixel in a different memory block of the first set of memory blocks, wherein each received LUT mesh point associated with the output pixel is a LUT mesh point of a neighboring output pixel located closest to the output pixel.

This has the advantage that the mesh points associated with the output pixel can afterward be quickly retrieved from memory, thereby reducing the memory access time and latency.

According to another aspect, a total number of memory blocks of the first set of memory blocks may match a number of data values required for performing the LUT interpolation step by the LUT interpolation method implemented on the integrated circuit.

According to another aspect, retrieving two or more input pixels from the second set of memory blocks that are located closest to the source pixel may comprise: retrieving in parallel, from each memory block of the second set of memory blocks, one input pixel respectively of the two or more input pixels.

According to another aspect, sequentially storing the received input pixels on the second set of memory blocks of the integrated circuit and storing the received further input pixel in the second set of memory blocks, may comprise the step of: distributing the received input pixels across memory blocks of the second set of memory blocks according to a predefined distribution rule appropriate for a frame interpolation method implemented on the integrated circuit.

This has the advantage of reducing memory access latency since the two or more input pixels required for determining the pixel value of the target pixel can afterward be quickly retrieved from memory.

According to another aspect, wherein a total number of memory blocks of the second set of memory blocks may match a number of input pixels required for performing a frame interpolation step by the frame interpolation method implemented on the integrated circuit.

This has the advantage of optimizing memory access latency, since each input pixel of the two or more input pixels required for the subsequent interpolation step is stored separately in a corresponding memory block, and the two or more input pixels can be retrieved simultaneously from the corresponding two or more memory blocks.

According to another aspect, the predefined portion of the input frame may correspond to a predefined number of pixel lines of the input frame that may correspond to at least a maximum deviation in pixel lines between input pixel and corresponding output pixel.

According to another aspect, the integrated circuit may be implemented on a field programmable gate array, FPGA.

In one aspect, an integrated circuit for video frame correction is adapted to perform the method steps of any one of the aspects previously disclosed.

According to one aspect, the integrated circuit may be implemented on a field programmable gate array, FPGA, and the first set of memory blocks comprises at least two block random access memories, BRAMs, and the second set of memory blocks comprises at least two BRAMs.

In one aspect, a system for combining a plurality of integrated circuits for video frame correction according to one of the previous paragraphs, comprises: a first integrated circuit, which is adapted to generate a first corrected output frame from a first input frame captured by a first sensor; a second integrated circuit, which is adapted to generate a second corrected output frame from a second input frame captured by a second sensor; and a sensor fusion unit adapted to combine the first corrected output frame and the second corrected output frame.

The above described system allows to achieve high quality output frames in near real-time.

According to a further aspect, first LUT mesh points received at the first integrated circuit may differ from the second LUT mesh points received at the second integrated circuit.

### BRIEF DESCRIPTION OF THE DRAWINGS

The foregoing summary and the following detailed description of preferred embodiments will be more readily understood if read in conjunction with the accompanying drawing. To illustrate the invention, the drawing shows exemplary details of the embodiments described. The information shown in the drawing is exemplary and explanatory only and does not limit the claimed invention.

The present invention is described in detail below with reference to the accompanying drawing:
Fig. 1 is an embodiment of the overall system.
Fig. 2 is a flowchart showing a method for video frame correction performed on the system of Fig. 1.
Fig. 3 is an example of sensor fusion of two different video frames taken from two different cameras at two different locations.

### DETAILED DESCRIPTION

Real-time image processing such as DVE applications require the underlying image processing hardware to be both high-throughput and low-latency. The present disclosure addresses the throughput and latency challenges by implementing a stream-based image processing architecture with optimized on-chip memory allocation. Embodiments of the disclosure eliminate the need for external frame buffers and caching algorithms, and enable constant memory response times.

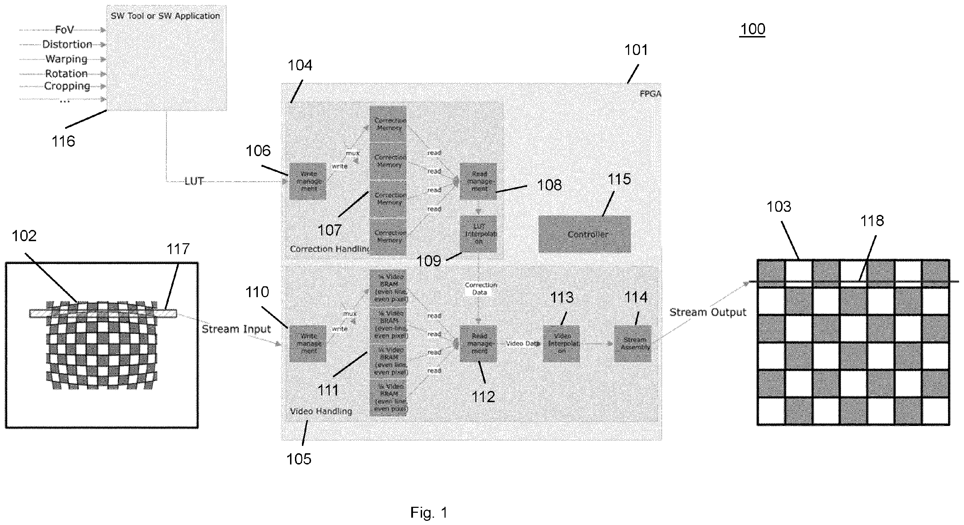

**Fig. 1** shows an embodiment of the system 100 architecture used by the present disclosure for video frame correction. In this embodiment the computations are performed by an integrated circuit (IC) 101, which may be implemented on a FPGA 101, or another suitable hardware device. The IC 101 receives the input pixels of an input frame 102 line-by-line as they are captured by an image sensor (not shown) and generates a corresponding corrected or modified output frame 103. The image sensor can be, for example, a charge-coupled device (CCD) or an active-pixel sensor (CMOS sensor).

The components implemented on the IC 101 are divided into two subcategories depending on their functionality within the system. There is the correction handling module 104 and the video frame handling module 105.

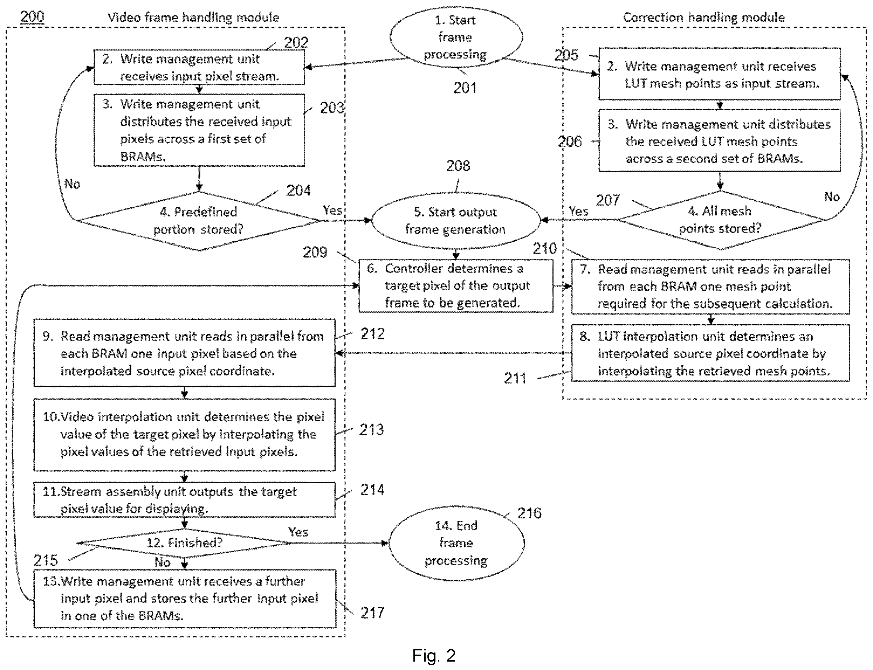

The correction handling module 104 includes a write management unit 106, a set of on-chip memory blocks 107, a read management unit 108, and a LUT interpolation unit 109. The correction handling module 104 outputs correction data, which comprises source pixel coordinates of a calculated source pixel of the input frame 102 and the coordinates of a corresponding target pixel of the output frame. The target pixel is an output pixel of the output frame whose pixel value is to be determined. The correction data is transmitted to the video frame handling module 105, which uses the correction data and the input pixels of the input frame to determine the pixel value of the target pixel. This will be further explained below in the context of Fig. 2.

The video frame handling module 105 includes a write management unit 110, a set of on-chip memory blocks 111, a read management unit 112, a video frame interpolation unit 113, and a stream assembly unit 114. The video frame handling module 105 receives the stream of input pixels and outputs a corresponding corrected stream of target pixels of the output frame. It performs the frame correction based on the correction data it receives from the correction handling module 104.

The two sets of on-chip memory blocks 107 and 111 each consists of at least two block random access memories (or BRAMs). A BRAM is a dual-port RAM module instantiated into the FPGA fabric to provide on-chip storage. The number of BRAMs within each of the sets of memory blocks 107 and 111 depends on the number of input pixels and mesh points required for the subsequent interpolations.

The IC 101 further comprises a controller unit 115 that controls overall operation and selects in each iteration the target pixel of the output frame 103 that is to be calculated or determined.

System 100 further comprises a software tool or software application 116. This application determines the correction algorithms that are to be applied on the input video frame 102 required to generate the corrected or modified output frame 103. The required corrections are determined based on the camera characteristics and the position of the camera when capturing the video frames. The corrections comprise at least one of the following: field of view correction, distortion correction, homography, warping, cutting, clipping, boxing, position-shifting, up- or downscaling, rotation and/or cropping. The corrections to be applied are combined by the software application 116 into a look-up-table (LUT). The LUT comprises mesh points, wherein each mesh point defines a relationship between an output pixel of the output frame 103 and a corresponding input pixel of the input frame 102. Simplified the LUT describes a mapping of an output pixel coordinate of the output frame 103 to a corresponding input pixel coordinate of the input frame 102. A mesh point defines a memory address of an input pixel of the input frame and represents a pointer to the corresponding input pixel or input pixel coordinates of the input frame. The unique identifier to find the match between the output pixel and the corresponding input pixel is the memory address. The pointer to the output pixel is defined by the rules of the write management unit 106 and the order and location of the mesh points in the memory blocks 107. The rules of the write management unit 106 and the read management unit 108 are defined during compile time and are static during the entire frame processing. The LUT may also contain storage locations of the mesh points (pixel coordinate of the output pixels in the output frame 103) and storage value of the mesh points (pixel coordinate of the corresponding input pixels in the input frame 102). This relationship between input frame 102 and output frame 103 is determined by the software application 116 based on the combination of selected image correction algorithms to be applied to the input frame 102. The same LUT may be kept in memory blocks 107 for a whole sequence of video frames or a different LUT may be written to the memory blocks 107 each time a new input frame is to be corrected or modified.

The mesh points defined by the software application 116 are transmitted to the IC 101. All the needed mesh points are sequentially written by the write management unit 106 of the correction handling module 104 to the memory blocks 107 before the actual frame correction is performed by the IC 101 (or frame handling module 105). Alternatively, the needed mesh points are written by the write management unit 106 to the memory blocks 107 simultaneously as the output frame is generated by the frame handling module 105.

The video frame handling module 105 stores a predefined portion of the input frame 117 in the set of memory blocks 111 to sequentially calculate a corresponding line of output pixels 118 of the output frame. The size (number of lines) of the predefined portion 117 depends on the maximum distance in pixel lines between the output pixels of the output frame 103 and their corresponding source pixels of the input frame 102.

**Fig. 2** illustrates an embodiment of a method 200 for video frame correction that is executed by the streaming architecture disclosed in Fig. 1.

As soon as an frame or input frame is captured by the camera, the method commences with the frame processing in step 201. In doing so, step 202 is triggered simultaneously on the video frame handling module 105 and step 205 on the correction handling module 104. Steps 202 to 207 are the required initialization steps. On the side of the video frame handling module the following steps are performed:

In step 202, the write management unit 110 receives input pixels of the input frame sequentially line-by-line from a camera image sensor or a buffer that is located between the image sensor and the write management unit 110.

This step is followed by step 203, in which the write management unit 110 distributes the input pixels sequentially as they are received to distinct memory blocks, for example, BRAMs, of the set of memory blocks 111. The number of BRAMs within the set of memory blocks 111 depends on the subsequent interpolation method being implemented by the video interpolation unit 113. For example, if the video interpolation unit 113 performs bilinear interpolation, four pixels are required for the calculation, and consequently, four memory blocks or BRAMs would have to be provided. If the interpolation method implemented requires more pixels for carrying out the calculation, memory blocks must be provided accordingly. The number of memory blocks must always be equal to the number of pixels required for the interpolation. The received input pixels are allocated to the memory blocks 111 according to a predefined distribution rule. The idea is that all input pixels (at least two pixels) needed for the subsequent interpolation 113 to calculate the pixel value of one of the output pixels are located in parallel in different memory blocks of the set of memory blocks 111. Each input pixel is stored only once in one of the memory blocks. When reading the input pixels from memory, the read management unit 112 loads the required input pixels from the BRAMs in parallel without requiring any additional redundant read accesses. This leads to an optimization of storage space and bandwidth. In the case of bilinear interpolation, the rule used for allocation depends on the input pixel position or coordinates within the input frame, i.e. even/odd row number and even/odd column number.

In step 204, the controller 115 determines whether a predefined portion 117 of the input frame 102 has already been written to the set of memory blocks 111, that is, whether a predefined percentage of the frame is already in memory. Not before this is the case, the calculation of the corrected output pixels of the output frame can be initiated in step 208. For example, if the input frame has a format of 1000x1000 pixels, but the maximum deviation between the input frame and the modified output frame is about 5 pixel lines, only +/- 5 pixel lines will be stored in the BRAMs 111. This maximum deviation is basically the maximum error between the input frame and the corresponding modified output frame and can be obtained from the LUT data. The maximum deviation between the frames in pixel lines represents the minimum number of pixel lines required as predefined portion 117 in the memory block 111. However, the interpolation method implemented in the video frame interpolation unit 113 may also have an influence on the number of required pixel lines, especially in cases where the predefined portion 117 comprises the first pixel line or the last pixel line of the frame. If it is determined that the predefined portion of the input frame was stored, the procedure continues with step 208.

In parallel with the steps just described (202, 203, 204), the following steps are performed on the side of the correction handling module 104:

In step 205, the write management unit 106 sequentially receives LUT mesh points from the software application 116.

This step is followed by step 206, in which the write management unit 106 sequentially writes the received mesh points into a series of memory blocks 107. As for the set of memory blocks 111 of the video frame handling module 105, the set of memory blocks 107 of the correction handling module 104 can consist of BRAMs. Basically, there is a mesh point associated with each output pixel of the output frame. The mesh point stores a pointer to the corresponding input pixel of the input frame or the pixel value of the corresponding input pixel. This mapping and the mesh points, respectively, are the result of a combination of one or more image correction techniques to be applied and is defined by the software application 116. However, rather than storing a mesh point for each output pixel, a reduced number of mesh points are written to the set of memory blocks 107, for example, only every nth multiple of the mesh points for a corresponding output pixel. For example, only every 4^{th} mesh point may be stored for every 4^{th} output pixel on the output frame. This further reduces the number of resources and the amount of memory required on the IC 101.

Analogous to the allocation of the input pixels in the set of memory blocks 111, the mesh points are also sequentially written to the different memory blocks of the set of memory blocks 107. As for the set of memory blocks 111 of the video frame handling module 105, the number of memory blocks within the set of memory blocks 107 of the correction handling module 104 depends on the subsequent interpolation method implemented by the LUT interpolation unit 109. Thus, if the LUT interpolation unit 109 requires four mesh points in the case of bilinear interpolation, the set of memory blocks 107 requires four memory blocks. The distribution of the mesh points to the different blocks also depends on the interpolation method of the LUT interpolation unit 109. In the case of bilinear interpolation, the distribution rule used for allocation of the mesh points is based on the location or coordinates of their corresponding output pixels on the output frame, i.e. even/odd row number and even/odd column number.

The goal is to have the mesh points needed for the interpolation within each iteration stored in distinct memory blocks of the set of memory blocks 107 so that they can be read out quickly and in parallel if needed by the LUT interpolation unit 109. In case of bilinear interpolation, four mesh points are distributed along four memory blocks or BRAMs of the set of memory blocks 107.

In step 207, the controller 115 determines whether all required mesh points were already stored into the set of memory blocks 107. All the required mesh points may be written to the set of memory blocks 107 during initialization. In essence, the required mesh points are all mesh points required for generating the output frame. However, it is also possible that only a predefined portion of the required mesh points is written to the set of memory blocks 107 during initialization and the remaining required mesh points are written dynamically to the set of memory blocks 107 during the output frame generation process. This has the advantage that possible errors within frame correction can be resolved during runtime. If this is the case, the method continues with step 208.

In step 208, the generation of the corrected output frame is initiated. For this purpose, the predefined portion 117 of the input frame must be in the set of memory blocks 111 and the mesh points of the predefined portion must be stored in memory 107, as well. The method performs the following steps within one clock cycle. Within each clock cycle, an output pixel of the output frame is calculated meaning that an input pixel of the input frame is corrected. The output frame is a corrected or modified version of the input frame. Depending on the case, the input/output frame rate and the input/output resolution determines the minimum clock rate.

In step 209, the controller 115 determines a target pixel of the output frame to be generated and to determine its pixel value respectively. The output pixels of the output frame can be calculated line by line. However, it is also possible to perform the calculation following a different order.

This is followed by step 210 performed on the correction handling module 104, where the read management unit 108 reads in parallel at least two mesh points from the at least two BRAMs of the set of memory blocks 107. In the case of bilinear interpolation, exactly four mesh points are read from exactly four BRAMs. The mesh points retrieved are the mesh points corresponding to the output pixels that are located closest to the target pixel on the output frame. Determining which output pixels with associated mesh points are closest to the target pixel can be based on a nearest neighbor algorithm, for example. This is defined by the read and write rules implemented by the write management unit 106 and the read management unit 108, which were defined during compile time. The at least two mesh points of the at least two output pixels that are closest to the target pixel are stored in the set of memory blocks 107 in such a way that they can be read out in parallel by the read management unit 108.

In step 211, also performed on the correction handling module 104, the LUT interpolation unit 109 calculates source pixel coordinates of a source pixel of the input frame by interpolating the input pixels of the retrieved mesh points. The source pixel is the input pixel on the input frame that is the source of the target pixel of the output frame. However, the interpolated coordinates of the source pixel are fractional numbers as a result of the interpolation and thus correspond to an fictitious input pixel.

To determine the pixel value of the target pixel, the correction data calculated by the correction handling module 104 is forwarded to the video frame handling module 105. The correction data comprises the coordinates of the target pixel and the interpolated source pixel coordinates.

The method proceeds, on the video frame handling module 105, where the read management unit 112 receives, in step 212, the correction data. The read management unit 112 retrieves from the at least two memory blocks or BRAMs of the set of memory blocks 111 at least two input pixels for the subsequent calculation. In case of bilinear interpolation implemented by the video interpolation unit 113, exactly four input pixels are read from exactly four BRAMs. The at least two input pixels are the input pixels of the input frame that are located closest to the pixel coordinates of the source pixel. Determining which input pixels are closest to the source pixel can be based on a nearest neighbor algorithm, for example. This is defined by the read and write rules implemented by the write management unit 110 and the read management unit 112, which were defined during compile time. The at least two input pixels that are closest to the source pixel are stored in the set of memory blocks 111 in such a way that they can be read out in parallel by the read management unit 112. In case of bilinear interpolation, for example, the left/top interpolation value corresponds to the neighboring input pixel having odd/even coordinates (row/column), the right/top interpolation value is the neighboring input pixel having even/odd coordinates, the left/bottom interpolation value is the neighboring pixel having odd/odd coordinates, and the right/bottom interpolation value is the neighboring input pixel having even/even coordinates. Each of these neighboring input pixels was written by the write management unit 110 to one of the four memory blocks of the set of memory blocks 111 during initialization. For example, the first memory block may store all input pixels having odd/even coordinates, the second memory block all input pixels having even/odd coordinates, the third memory block all input pixels having odd/odd coordinates, and the fourth memory block all input pixels having even/even coordinates.

The next step 213 comprises the calculation of the pixel value of the target pixel by interpolating the at least two input pixels by the video frame interpolation unit 113. For example, the pixel value is a gray value or a color value. In case the input frame is a color image, each of the additive primary color components has to be processed and interpolated individually according to the method described in diagram 200.

In step 214, the stream assembly unit 114 outputs the calculated pixel value of the target pixel for displaying, for example, on the HUD.

If the output frame is completed, the method proceeds from step 215 to step 216 and ends the frame computation. For consecutive video frames, the method is executed again for each newly created input frame.

If the output frame is not yet complete, the method proceeds to step 217. The write management unit 110 receives another input pixel from the image sensor and stores it in one of the at least four memory blocks of the set of memory blocks 111 according to the predefined distribution rule. A next clock cycle begins and the method again performs steps 209 through 215 for a newly selected target pixel of the output frame.

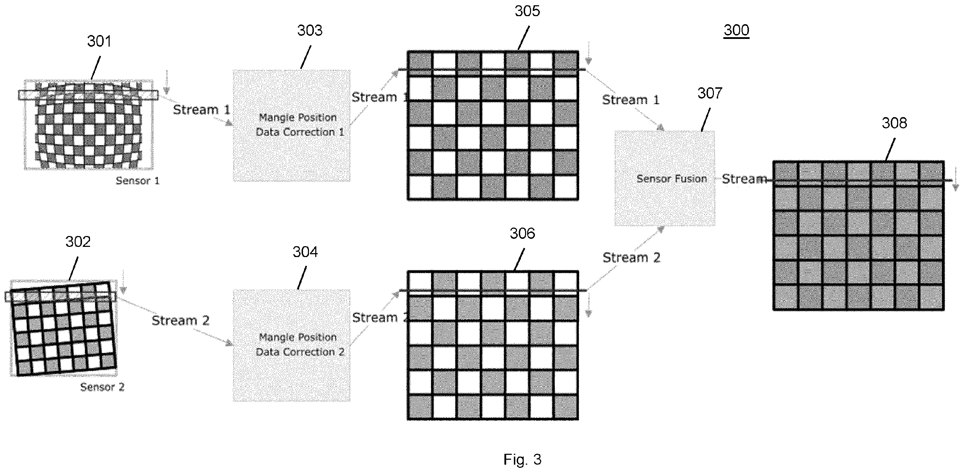

**Fig. 3** shows a sensor fusion arrangement that combines sensor data from disparate cameras located at different locations to generate fused sensor data. The fused sensor data has less uncertainty compared to the sensor data from a single camera. Diagram 300 shows how sensor data from two sensors at different locations can be fused, but it is also possible to combine data from more than two sensors. The cameras can be of the same camera type or of distinct camera types. The cameras can be located at different positions on an aircraft or a road vehicle. The cameras capture frames of the same scenery, but from different camera positions and/or angles.

In the embodiment of Fig. 3 there are two input frames 301, 302 taken from two cameras at two different locations. Each input frame 301, 302 is subject to certain errors resulting from the properties of its source camera and its source camera's position.

In the example of Fig. 3, each input frame 301, 302 is handled individually by a corresponding IC 303, 304. The ICs 303, 304 may be implemented on one FPGA or each of the ICs 303, 304 may be implemented on different FPGAs. Each of the ICs 303, 304 may have the streaming-architecture shown in Fig. 1. IC 303 receives the input pixels of the input frame 301 in a data stream and performs the image correction method described in connection with Fig. 2 to produce a corresponding corrected output frame 305. Likewise, IC 304 receives the input pixels of input frame 302 in a stream of data and performs the image correction process disclosed in connection with Fig. 2 to produce an associated corrected output frame 306. The corrections performed by each of the ICs 303, 304 are specific to the errors in the associated input frame 301, 302. Both input frames 301, 302 are processed and corrected in parallel and in near real-time. The two streams of output pixels coming from each of the ICs 303, 304 are fused by a sensor fusion unit 307 to produce a final combined output pixel stream. The combined output pixel stream sequentially builds a combined output frame 308. The combined output frame 308 has the properties of being more informative and accurate than one of the single source frames 305, 306, and it consists of all the necessary information.

## Claims

1. A method of video frame correction by an integrated circuit, IC, wherein the integrated circuit performs the following steps:
receiving lookup table, LUT, mesh points from a software application, each LUT mesh point defining a projection from an output pixel of an output frame to a corresponding input pixel of an input frame, wherein a total number of LUT mesh points is less than a total number of pixels of the output frame;
storing the received LUT mesh points on a first set of memory blocks of the integrated circuit;
sequentially receiving input pixels of the input frame as captured by an image sensor of a camera;
sequentially storing the received input pixels on a second set of memory blocks of the integrated circuit; and
in response to storing a predefined portion of the input frame, generating the output frame by further performing the following steps within one fixed clock cycle:
selecting one of the output pixels of the output frame as target pixel;
determining a pixel value of the target pixel by:
retrieving, from the first set of memory blocks, two or more LUT mesh points associated with the target pixel;
determining a source pixel of the predefined portion for the target pixel on the input frame by interpolating data values of the retrieved two or more LUT mesh points;
retrieving two or more input pixels from the second set of memory blocks that are located closest to the determined source pixel;
determining the pixel value of the target pixel by interpolating between the two or more input pixels retrieved;
outputting the pixel value of the target pixel;
if all output pixel values of all output pixels are determined, terminating, or otherwise further performing the following steps:
receiving a further input pixel from the image sensor of the camera; and
storing the received further input pixel in the second set of memory blocks;
selecting another of the output pixels of the output frame as target pixel.

2. The method of claim 1, wherein each LUT mesh point is a pointer to one of the input pixels.

3. The method of one of claims 1 or 2, wherein determining the source pixel comprises the step of determining interpolated source pixel coordinates of the source pixel by interpolating, based on a LUT mesh point interpolation method implemented on the integrated circuit, between two or more input pixel coordinates of the retrieved two or more LUT mesh points.

4. The method of any one of the preceding claims, wherein each multiple of the output pixels is an output pixel having one corresponding LUT mesh point in the first set of memory blocks, and wherein the LUT mesh points are determined by the software application based on one or more video frame geometry corrections to be applied to the input frame.

5. The method of any one of the preceding claims, wherein the retrieved two or more LUT mesh points associated with the target pixel are LUT mesh points of corresponding two or more neighboring output pixels located closest to the target pixel having one corresponding LUT mesh point in the first set of memory blocks, and wherein retrieving the two or more LUT mesh points from the first set of memory blocks comprises:
retrieving in parallel, from each memory block of the first set of memory blocks, one LUT mesh point of the two or more LUT mesh points respectively.

6. The method of any one of the preceding claims, wherein storing the received LUT mesh points on the first set of memory blocks further comprises performing the following steps by the integrated circuit for each output pixel of the output frame:
sequentially storing each received LUT mesh point associated with the output pixel in a different memory block of the first set of memory blocks, wherein each received LUT mesh point associated with the output pixel is a LUT mesh point of a neighboring output pixel located closest to the output pixel.

7. The method of any one of the preceding claims, wherein a total number of memory blocks of the first set of memory blocks matches a number of data values required for performing the LUT mesh point interpolation step based on the LUT mesh point interpolation method implemented on the integrated circuit.

8. The method of any one of the preceding claims, wherein retrieving two or more input pixels from the second set of memory blocks that are located closest to the source pixel comprises:
retrieving in parallel, from each memory block of the second set of memory blocks, one input pixel respectively of the two or more input pixels.

9. The method of any one of the preceding claims, wherein sequentially storing the received input pixels on the second set of memory blocks of the integrated circuit and storing the received further input pixel in the second set of memory blocks, comprises the step of:
distributing the received input pixels across memory blocks of the second set of memory blocks according to a predefined distribution rule appropriate for a frame interpolation method implemented on the integrated circuit.

10. The method of any one of the preceding claims, wherein a total number of memory blocks of the second set of memory blocks matches a number of input pixels required for performing a frame interpolation step based on the frame interpolation method implemented on the integrated circuit.

11. The method of any one of the preceding claims, wherein the predefined portion of the input frame corresponds to a predefined number of pixel lines of the input frame that corresponds to at least a maximum deviation in pixel lines between input pixel and corresponding output pixel.

12. The method of any one of the preceding claims, wherein the integrated circuit is implemented on a field programmable gate array, FPGA.

13. An integrated circuit for video frame correction, wherein the integrated circuit is adapted to perform the method steps of claim 1.

14. The integrated circuit of claim 13, wherein the integrated circuit is implemented on a field programmable gate array, FPGA, and the first set of memory blocks comprises at least two block random access memories, BRAMs, and the second set of memory blocks comprises at least two BRAMs.

15. A system for combining a plurality of integrated circuits for video frame correction according to claim 13, wherein the system comprises:
a first integrated circuit, which is adapted to generate a first corrected output frame from a first input frame captured by a first sensor;
a second integrated circuit, which is adapted to generate a second corrected output frame from a second input frame captured by a second sensor; and
a sensor fusion unit adapted to combine the first corrected output frame and the second corrected output frame, wherein preferably first LUT mesh points received at the first integrated circuit differ from the second LUT mesh points received at the second integrated circuit.
